# EUROPÄISCHE PATENTSCHRIFT

(11) **EP 2 569 848 B1**
(45) Veröffentlichungstag und Bekanntmachung des Hinweises auf die Patenterteilung: **29.08.2018**
(21) Anmeldenummer: 11711547.7
(22) Anmeldetag: 30.03.2011
(51) Int. Cl.: H02K 1/18, H02K 15/02

(54) **VERFAHREN ZUR HERSTELLUNG EINES ELEKTROMOTORS**
METHOD FOR PRODUCING AN ELECTRIC MOTOR
PROCÉDÉ DE FABRICATION D'UN MOTEUR ÉLECTRIQUE

(30) Priorität: 14.05.2010 DE 102010028989
(43) Veröffentlichungstag der Anmeldung: 20.03.2013
(73) Patentinhaber: Robert Bosch GmbH, 70442 Stuttgart (DE)
(72) Erfinder: KOHL, Stephan, 70376 Stuttgart (DE); BERGMANN, Dirk, 38122 Braunschweig (DE); HELMI, Hussam, 71672 Marbach (DE)
(86) Internationale Anmeldenummer: PCT/EP2011/054884
(87) Internationale Veröffentlichungsnummer: WO 2011/141222

(56) Entgegenhaltungen:
- DE-A1- 10 332 958
- JP-A- 63 148 842

## Beschreibung

Die Erfindung bezieht sich auf ein Verfahren zur Herstellung eines Elektromotors.

### Stand der Technik

Aus der DE 102 61 617 A1 ist ein Elektromotor bekannt, der in einem als Statorpaket ausgeführten Stator einen drehbar gelagerten Rotor aufweist, welcher durch Erzeugen eines elektromagnetischen Wechselfeldes im Stator angetrieben wird. Das Statorpaket ist in einem Motorgehäuse aufgenommen und mithilfe federnder Spannmittel mit dem Motorgehäuse verspannt. Die Spannmittel erlauben es, unabhängig von der aktuellen Wärmeausdehnung eine konstant feste Verbindung zwischen Stator und Gehäuse herzustellen.

Die Verbindung zwischen Stator und Motorgehäuse kann gemäß der DE 102 61 617 A1 auch über einen Schrumpfprozess durchgeführt werden, bei dem das aus Leichtmetall bestehende Motorgehäuse erwärmt und das Statorpaket im erwärmten Zustand eingesetzt wird. Beim Abkühlen schrumpft das Gehäuse und sitzt dadurch fest auf dem Stator auf. Nachteilig hierbei ist jedoch, dass mit einer hohen Presspassung gearbeitet werden muss, um in allen Betriebszuständen einen sicheren Halt zwischen Stator und Motorgehäuse zu gewährleisten. Die hohe Presspassung kann aber insbesondere bei einem weiteren Schrumpfen des Gehäuses bei tiefen Temperaturen zu Spannungsüberhöhungen führen, welche einen Bruch des Gehäuses zur Folge haben können.

Als weitere Verbindungstechniken zwischen Stator und Motorgehäuse werden in der DE 102 61 617 A1 Schrauben, Klemmen, Kleben und Schweißen genannt. Die DE 103 32 958 A1 offenbart eine feste Verbindung zwischen einem Motorgehäuse und einem Stator, die entweder durch Aufschrumpfen des Motorgehäuses auf den Stator, durch axiales Einpressen des Stators in das Motorgehäuse oder über eine Klebeverbindung hergestellt wird.

Die JP 63148842 A offenbart die Verbindung zwischen einem Rotor, der Träger von Permanentmagneten ist, mit einer Rotorwelle, die durch eine Öffnung im Rotor geführt ist. Zunächst wird in einem ersten Schritt der Rotor auf eine erhöhte Temperatur erwärmt, anschließend wird die Welle eingeführt, die beim Abkühlen aufgrund der Schrumpfung mechanisch mit dem Rotor verbunden wird. Über eine Einlassöffnung wird danach in den die Welle aufnehmenden Bereich des Rotors ein Klebemittel eingeführt.

### Offenbarung der Erfindung

Der Erfindung liegt die Aufgabe zugrunde, mit einfachen Maßnahmen eine feste Verbindung zwischen einem Stator und einem Motorgehäuse zu schaffen, wobei die Verbindung sowohl eine hohe mechanische Festigkeit als auch eine thermische Beständigkeit aufweisen soll.

Diese Aufgabe wird erfindungsgemäß mit den Merkmalen der unabhängigen Ansprüche gelöst. Die abhängigen Ansprüche geben zweckmäßige Weiterbildungen an.

Ein erster Aspekt der Erfindung betrifft ein Verfahren zur Herstellung eines Elektromotors mit einem in einem Motorgehäuse aufgenommenen Stator, wobei der Elektromotor üblicherweise als Innenläufermotor ausgeführt ist und in dem Stator ein Rotor drehbar gelagert ist, welcher durch Erzeugen eines elektromagnetischen Wechselfeldes angetrieben wird. Zur Montage von Stator und Motorgehäuse wird zunächst das Motorgehäuse auf eine vorgegebene Fügetemperatur erwärmt, anschließend wird der Stator in das Motorgehäuse eingesetzt. Aufgrund der Erwärmung dehnt sich das Motorgehäuse aus, wodurch der Aufnahmebereich im Innern des Motorgehäuses, welcher zur Aufnahme des Stators vorgesehen ist, sich insbesondere in Radialrichtung vergrößert. Der Stator kann daher kräftefrei oder zumindest mit nur geringen Kräften in das Motorgehäuse eingeführt bzw. das Motorgehäuse auf den Stator aufgesetzt werden. Mit dem Abkühlen schrumpft das Motorgehäuse, wodurch der Stator im Motorgehäuse radial festgeklemmt wird.

Zusätzlich zur Verbindung über den Schrumpfprozess wird der Stator mit dem Motorgehäuse verklebt. Die Klebemasse befindet sich am Außenmantel des Stators und/oder der Innenseite des Motorgehäuses und bewirkt eine zusätzliche Verbindung zwischen Stator und Motorgehäuse.

Diese Vorgehensweise hat verschiedene Vorteile. Zum einen kann über den gesamten Temperatureinsatzbereich, der beispielsweise zwischen minus 40° und 120° C liegt, eine feste Verbindung in Achsrichtung und in Umfangsrichtung zwischen Stator und Motorgehäuse gewährleistet werden. Im oberen Temperaturbereich kommt hauptsächlich die Klebeverbindung zum Tragen, da aufgrund der thermischen Ausdehnung des Motorgehäuses die mechanischen Haltekräfte zwischen Stator und Motorgehäuse reduziert sind. Im unteren Temperaturbereich wirken dagegen die mechanischen Haltekräfte, welche durch die Schrumpfung (Presspassung) des Motorgehäuses entstehen, in stärkerem Maße als die Klebeverbindung. Die mechanischen Haltekräfte durch die Schrumpfung und die Verbindungskräfte durch das Kleben können somit jeweils auf bestimmte Temperaturbereiche angepasst werden, so dass die Schrumpfung mit größeren Toleranzen bzw. geringerer Presspassung durchgeführt werden kann und dementsprechend insbesondere bei tiefen Temperaturen geringere Spannungen im Motorgehäuse die Folge sind.

Ein weiterer Vorteil dieser Vorgehensweise liegt in der Zeit- und Energieeinsparung. Grundsätzlich genügt es im Vergleich zu Ausführungen aus dem Stand der Technik, das Motorgehäuse für den Einschrumpfvorgang weniger stark zu erhitzen, da aufgrund der geringeren notwendigen Überdeckung/Pressung eine kleinere, thermisch bedingte Dehnung des Motorgehäuses für das Einführen des Stators ausreicht. Sowohl das Erhitzen auf eine niedrigere Fügetemperatur als auch das anschließende Abkühlen erfolgen im Vergleich zu höheren Fügetemperaturen in kürzeren Zeitspannen, außerdem ist der erforderliche Energieaufwand geringer.

Gemäß einer vorteilhaften Ausführung ist vorgesehen, dass die Fügetemperatur so gewählt wird, das der Stator ohne Presspassung in das Motorgehäuse eingeschoben wird, so dass der Stator praktisch kräftefrei ist und eine radiale Passungsüberdeckung von null Millimetern besteht. Gegebenenfalls kann sogar ein Ringspalt geringer Dicke zwischen dem Außenmantel des Stators und der Innenseite des Motorgehäuses bestehen. Beim Schrumpfen des Motorgehäuses wird ein derartiger Ringspalt vollständig eliminiert.

Gemäß eines weiteren Aspektes ist vorgesehen, dass bei Normaltemperatur der Stator mit Presspassung im Motorgehäuse aufgenommen ist, und zwar unabhängig von der Klebeschicht, welche sich auf dem Außenmantel des Stators befindet. Dadurch ist sichergestellt, dass zumindest bei mittleren und tieferen Temperaturen eine Verbindung mit hoher mechanischer Festigkeit zwischen Stator und Motorgehäuse besteht.

Die Fügetemperatur beträgt beispielsweise 120°. Auf diese Temperatur wird das Motorgehäuse erwärmt. Die Passung zwischen Stator und Gehäuse ist dabei so gewählt, dass sich anschließend der Stator kraftfrei oder zumindest annähernd kraftfrei in das Motorgehäuse einfügen lässt. Das Einfügen erfolgt in Achsrichtung, vorzugsweise kombiniert mit einer überlagerten Relativdrehbewegung zwischen Stator und Motorgehäuse, was den Vorteil hat, dass der auf dem Außenmantel des Stators befindliche Klebstoff gleichmäßig verteilt und die Gefahr, dass Klebstoff beim Einfügen des Stators in das Motorgehäuse abgestreift wird, verringert wird. Durch die Berührung des Klebers mit dem erwärmten Motorgehäuse erfolgt zudem eine schnelle Aushärtung.

Grundsätzlich ist es vorteilhaft, dass der Stator über seinen gesamten Außenmantel mit der Innenseite des Motorgehäuses verklebt wird. Es kann gegebenenfalls aber auch ausreichend sein, den Außenmantel des Stators entweder nur über eine axiale Teillänge oder in Umfangsrichtung segmentweise bzw. in einer Kombination aus beidem mit Klebstoff zu versehen. Zusätzlich oder alternativ zum Aufbringen des Klebstoffes auf die äußere Mantelfläche des Stators kommt auch ein Aufbringen auf die Innenseite des Motorgehäuses bzw. eine Kombination von beidem in Betracht.

Ein weiterer Aspekt der Erfindung betrifft einen Elektromotor, welcher nach dem vorbeschriebenen Verfahren hergestellt sein kann. Grundsätzlich kommen aber auch Elektromotoren in Betracht, die unabhängig von dem Verfahren montiert werden. Der Elektromotor umfasst einen Stator, der in einem Motorgehäuse aufgenommen ist, wobei in der Ausführung des Elektromotors als Innenläufermotor ein Rotor im Stator drehend gelagert ist. Die Verbindung zwischen dem Stator und dem umgreifenden Motorgehäuse erfolgt dergestalt, dass der Stator über eine erste axiale Teillänge mit Presspassung im Motorgehäuse aufgenommen und über eine weitere, zweite axiale Teillänge mit dem Motorgehäuse verklebt ist. In dieser Ausführung erfolgt eine geometrische Aufteilung zwischen dem mechanischen Verbinden mittels der Presspassung und der Verbindung über Kleben. Die beiden Verbindungsarten erstrecken sich auf verschiedene axiale Teillängen des Stators bzw. des Motorgehäuses. Dies ermöglicht es, über die Presspassung den Stator bereits bei Raumtemperatur zu fixieren und in Achsrichtung sowie radial im Motorgehäuse zu positionieren. Über die Verklebung erfolgt die dauerhafte Verbindung, welche innerhalb des Temperaturarbeitsbereiches eine ausreichende Festigkeit und Beständigkeit gewährleistet.
Grundsätzlich ist es nicht erforderlich, das Motorgehäuse für den Montageprozess zu erwärmen. Gleichwohl ist es möglich und sinnvoll, eine Erwärmung vorzunehmen und die darauf folgende Schrumpfung in Kombination mit Kleben für eine Verbesserung der mechanischen Verbindung zwischen Stator und Motorgehäuse zu nutzen. Erfindungsgemäß ist vorgesehen, dass im Bereich der axialen Teillänge, über die die Verklebung erfolgt, ein Ringspalt zwischen der Mantelfläche des Stators und der Innenseite des Motorgehäuses gebildet ist. Dieser Ringspalt dient zur Aufnahme des Klebstoffes und ist insbesondere vollständig von dem Klebstoff ausgefüllt. Der Ringspalt kann mit hoher Maßgenauigkeit erzeugt werden, so dass die in Radialrichtung gemessene Klebespaltdicke sowohl über den gesamten Umfang als auch die axiale Länge der Verklebung gleichbleibend genau ist. Dies verbessert die Güte bzw. Festigkeit der Klebung. Außerdem ist eine exakte Lageausrichtung (radiale Positionierung) des Stators im Motorgehäuse möglich.
Der Kleber kann sowohl vor dem Fügen als auch erst nach dem Fügen auf den Stator bzw. in den Ringspalt auf- bzw. eingebracht werden. Die Entscheidung hierüber hängt unter anderem von der Viskosität des Klebemittels und der Ringspaltdicke ab.
Gemäß einer vorteilhaften Ausführung ist vorgesehen, dass die axiale Teillänge, über die die Presspassung zwischen Stator und Motorgehäuse erfolgt, nicht zur Kraftübertragung zwischen Stator und Motorgehäuse erfolgt, sondern im wesentlichen nur zur Fixierung/Positionierung des Stators innerhalb des Motorgehäuses während des Montageprozesses. Daher genügt es, die axiale Teillänge mit Presspassung kürzer als die axiale Teillänge mit Verklebung auszuführen. Es kommen beispielsweise Größenverhältnisse kleiner 1 : 4 in Betracht, so dass die axiale Teillänge mit Presspassung kleiner als 25% der axialen Teillänge mit Verklebung beträgt.

Gemäß einer weiteren zweckmäßigen Ausführung ist an der Innenseite des Motorgehäuses im Bereich der Presspassung eine umlaufende Ringnut gebildet, die einen axialen Anschlag für den Stator bildet. Die Ringschulter erleichtert die Montage, da der Stator axial bis zum Anschlagen an die Ringschulter in das Motorgehäuse eingeführt werden kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Elektromotor, mit einem Stator, welcher in einem Motorgehäuse aufgenommen ist,
- Fig. 2: der Stator des Elektromotors in Einzeldarstellung,
- Fig. 3: einen Schnitt durch einen Elektromotor mit einem in einem Motorgehäuse aufgenommenen Stator in einer weiteren Ausführung.

In den Figuren sind gleiche Bauteile mit gleichen Bezugszeichen versehen.

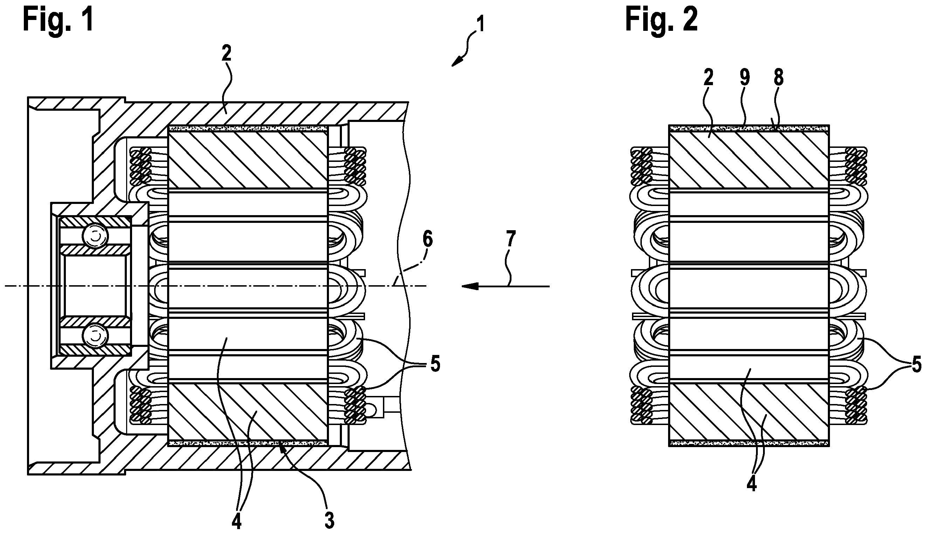

Fig. 1 zeigt einen Schnitt durch einen Elektromotor 1, der im Kraftfahrzeugbereich eingesetzt werden kann, beispielsweise zur Lenkunterstützung, wobei auch Anwendungen außerhalb des Kraftfahrzeugbereichs in Betracht kommen, beispielsweise als Antriebsmotoren für Werkzeugmaschinen. Der Elektromotor 1 weist in einem Motorgehäuse 2 einen Stator 3 auf, der als Innenläufermotor ausgebildet ist und einen drehbar gelagerten Rotor umschließt. Durch Erzeugen eines elektromagnetischen Wechselfeldes wird der Rotor in Drehung versetzt.

Wie Fig. 1 sowie der Einzelstellung des Stators 3 gemäß Fig. 2 zu entnehmen, besteht der Stator 3 aus einer Mehrzahl von über den Umfang verteilt angeordneten, einzelnen Trägerzähnen 4, die jeweils Träger einer Spule 5 sind. Die Trägerzähne 4 und die Spulen 5 erstrecken sich jeweils parallel zur Motorlängsachse 6.

Zur Montage des Elektromotors 1 muss der Stator 3, wie mit Pfeil 7 angegeben, in Achsrichtung in die Aufnahmeöffnung im Motorgehäuse 2 eingeführt werden. Zunächst wird das vorzugsweise aus Leichtmetall bestehende Motorgehäuse 2 bis auf eine Fügetemperatur erwärmt, die beispielsweise 120° C beträgt. Nach dem Erreichen der Fügetemperatur wird der Stator 3 in das Motorgehäuse 2 eingeschoben bzw. das Motorgehäuse 2 auf den Stator 3 aufgeschoben. Der Durchmesser im Bereich des Außenmantels des Stators 3 und der Innendurchmesser im Motorgehäuse 2 sind so aufeinander abgestimmt, dass der Stator 3 ohne Pressung, also kraftfrei in das Motorgehäuse 2 eingeschoben werden kann, wenn dieses die Fügetemperatur erreicht hat. Mit dem Abkühlen geht eine Schrumpfung des Motorgehäuses 2 in Radialrichtung einher, so dass durch die Schrumpfung eine feste mechanische Verbindung zwischen der Innenseite des Motorgehäuses 2 und dem Mantelmantel des Stators 3 entsteht.

Der Außenmantel 8 des Stators 3 ist mit einer Klebeschicht 9 versehen, um zusätzlich zur mechanischen Verbindung über die Schrumpfung des Motorgehäuses 2 auch eine Klebeverbindung zwischen dem Stator und dem Motorgehäuse zu erreichen. Bei dem Klebemittel handelt es sich beispielsweise um einen anaeroben Klebstoff. Dieser härtet nach dem Einführen des Stators 3 in das Motorgehäuse 2 aufgrund der erhöhten Temperatur des Motorgehäuses schnell aus.

Das Einführen des Stators 3 in das Motorgehäuse 2 erfolgt bevorzugt durch eine Überlagerung der axialen Einschubbewegung mit einer Relativdrehbewegung zwischen Motorgehäuse und Stator. Durch die Drehbewegung wird der Klebstoff in der Klebeschicht 9 nochmals gleichmäßig auf dem Außenmantel 8 des Stators 3 verteilt, wodurch die Gefahr, dass der Klebstoff beim Einfügen des Stators in das Motorgehäuse abgestreift wird, verringert ist. Zudem erreicht man dadurch eine höhere Positionsgenauigkeit des Stators im Gehäuse

Zusätzlich oder alternativ zum Aufbringen des Klebstoffs auf den Außenmantel 8 des Stators kann es angezeigt sein, Klebstoff an die Innenseite des Motorgehäuses 2 aufzubringen.

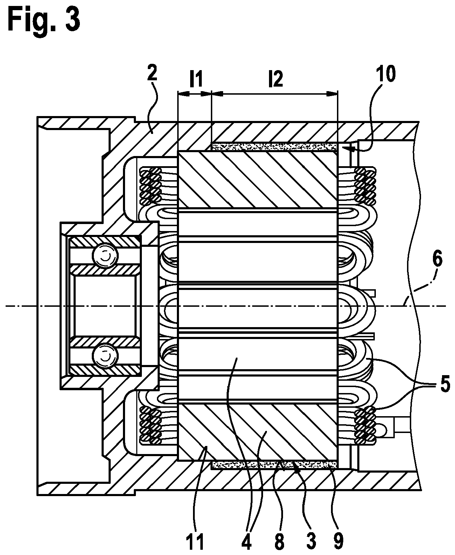

In Fig. 3 ist ein weiteres Ausführungsbeispiel für einen Elektromotor 1 dargestellt. Der Stator 3 ist in das Motorgehäuse 2 eingesetzt, wobei lediglich über eine axiale Teillänge l₁ eine Presspassung zwischen dem Stator und dem Motorgehäuse besteht. Über eine größere Teillänge l₂ existiert dagegen ein Ringspalt 10 zwischen dem Außenmantel 8 des Stators 3 und der Innenseite des Motorgehäuses 2, wobei der Ringspalt 10 mit der Klebeschicht 9 ausgefüllt ist, über die der größte Teil der Verbindungskräfte zwischen Stator und Motorgehäuse übertragen wird. Die radiale Dicke des Ringspaltes 10 hängt unter anderem von der Viskosität des verwendeten Klebemittels ab.

Die Teillänge l₁, über die der Stator 3 mit Presspassung im Motorgehäuse 2 gehalten ist, ist signifikant kürzer als die zweite Teillänge l₂ des Ringspaltes 10 mit der darin enthaltenen Klebeschicht 9. Die Teillänge l₁ hat lediglich die Aufgabe, während der Montage den Stator 3 vorläufig innerhalb des Motorgehäuses 2 zu fixieren, so dass ein in Umfangsrichtung gleichbleibender Ringspalt 10 gegeben ist. Die axiale Teillänge l₁ beträgt vorzugsweise nicht mehr als 25% der axialen Teillänge l₂.

Im Bereich der Presspassung ist an der radialen Innenseite des Motorgehäuses 2 eine Ringschulter 11 gebildet, an der eine Kante des Stators 3 anliegt. Der sich radial nach innen erstreckende Abschnitt der Ringschulter 11 bildet einen axialen Anschlag für den Stator. Der sich in Achsrichtung erstreckende Abschnitt der Ringschulter 11 dient zum radialen Festklemmen des Stators 3 im Sinne einer Presspassung.

Das Einfügen des Stators 3 in das Motorgehäuse 2 kann bei Raumtemperatur erfolgen. Grundsätzlich möglich ist aber auch ein Erwärmen des Motorgehäuses 2 bis zu einer Fügetemperatur und einem Schrumpfen nach dem Einschieben des Stators, um diesen mit einer erhöhten Klemmkraft in der gewünschten Position im Motorgehäuse festzusetzen.

Das Einbringen bzw. Aufbringen der Klebeschicht 9 kann sowohl vor dem Einführen des Stators 3 in das Motorgehäuse 2 als auch im bereits eingeschobenen Zustand des Stators erfolgen, abhängig von Parametern wie der radialen Dicke des Ringspaltes 10 und der Viskosität des Klebemittels.

## Patentansprüche

1. Elektromotor mit einem Stator (3), der über eine axiale Teillänge mit Presspassung in einem Motorgehäuse (2) aufgenommen ist, **dadurch gekennzeichnet, dass** der Stator (3) über eine weitere axiale Teillänge mit dem Motorgehäuse (2) verklebt ist, wobei im Bereich der axialen Teillänge mit Verklebung ein Ringspalt (10) zwischen der Mantelfläche des Stators (3) und der Innenseite des Motorgehäuses (2) zur Aufnahme des Klebstoffes gebildet ist.

2. Elektromotor nach Anspruch 1, **dadurch gekennzeichnet, dass** die axiale Teillänge mit Presspassung kürzer ist als die axiale Teillänge mit Verklebung, beispielsweise kleiner als 25% der Teillänge mit Verklebung.

3. Elektromotor nach Anspruch 1 oder 2, **dadurch gekennzeichnet, dass** an der Innenseite des Motorgehäuses (2) im Bereich der Presspassung eine umlaufende Ringschulter (11) gebildet ist, die einen axialen Anschlag für den Stator (3) bildet.

4. Verfahren zur Herstellung eines Elektromotors (1) nach einem der Ansprüche 1 bis 3, mit einem in einem Motorgehäuse (2) aufgenommenen Stator (3), wobei zur Montage zunächst das Motorgehäuse (2) auf eine Fügetemperatur erwärmt und anschließend der Stator (3) über eine axiale Teillänge in das Motorgehäuse (2) eingesetzt und zusätzlich der Außenmantel (8) des Stators (3) mit der Innenseite des Motorgehäuses (2) über eine weiter axiale Teillänge verklebt wird.

5. Verfahren nach Anspruch 4, **dadurch gekennzeichnet, dass** bei der Fügetemperatur der Stator (3) ohne Presspassung in das Motorgehäuse (2) eingeschoben wird.

6. Verfahren nach Anspruch 4 oder 5, **dadurch gekennzeichnet, dass** bei Normaltemperatur der Stator (3) mit Presspassung im Motorgehäuse (2) aufgenommen ist.

7. Verfahren nach einem der Ansprüche 4 bis 6, **dadurch gekennzeichnet, dass** die Fügetemperatur zumindest annähernd 120° C beträgt.

8. Verfahren nach einem der Ansprüche 4 bis 7, **dadurch gekennzeichnet, dass** dem axialen Einschieben des Stators (3) in das Motorgehäuse (2) eine Relativdrehung zwischen Motorgehäuse (2) und Stator (3) überlagert wird.

## Claims

1. Electric motor comprising a stator (3) which is accommodated in a motor housing (2) with a press-fit over an axial partial length, **characterized in that** the stator (3) is adhesively bonded to the motor housing (2) over a further axial partial length, wherein, in the region of the axial partial length with adhesive bonding, an annular gap (10) is formed between the casing surface of the stator (3) and the inner side of the motor housing (2) for the purpose of receiving the adhesive.

2. Electric motor according to Claim 1, **characterized in that** the axial partial length with a press-fit is shorter than the axial partial length with adhesive bonding, for example smaller than 25% of the partial length with adhesive bonding.

3. Electric motor according to Claim 1 or 2, **characterized in that** a circumferential annular shoulder (11), which forms an axial stop for the stator (3), is formed in the region of the press-fit on the inner side of the motor housing (2).

4. Method for producing an electric motor (1) according to one of Claims 1 to 3, comprising a stator (3) which is accommodated in a motor housing (2), wherein, for assembly purposes, the motor housing (2) is first heated to a joining temperature and then the stator (3) is inserted into the motor housing (2) over an axial partial length and additionally the outer casing (8) of the stator (3) is adhesively bonded to the inner side of the motor housing (2) over a further axial partial length.

5. Method according to Claim 4, **characterized in that** the stator (3) is inserted into the motor housing (2) without a press-fit at the joining temperature.

6. Method according to Claim 4 or 5, **characterized in that** the stator (3) is accommodated in the motor housing (2) with a press-fit at normal temperature.

7. Method according to one of Claims 4 to 6, **characterized in that** the joining temperature is at least approximately 120°C.

8. Method according to one of Claims 4 to 7, **characterized in that** a relative rotation between the motor housing (2) and the stator (3) is superimposed onto the axial insertion of the stator (3) into the motor housing (2).

## Revendications

1. Moteur électrique avec un stator (3), qui est logé dans un boîtier de moteur (2) avec un ajustement serré sur une longueur axiale partielle, **caractérisé en ce que** le stator (3) est collé au boîtier de moteur (2) sur une autre longueur axiale partielle, dans lequel une fente annulaire (10) est formée dans la région de la longueur axiale partielle avec un collage entre la surface latérale du stator (3) et le côté intérieur du boîtier de moteur (2) afin d'y loger la colle.

2. Moteur électrique selon la revendication 1, **caractérisé en ce que** la longueur axiale partielle avec un ajustement serré est plus courte que la longueur axiale partielle avec un collage, par exemple plus courte que 25 % de la longueur partielle avec le collage.

3. Moteur électrique selon la revendication 1 ou 2, **caractérisé en ce qu'**un épaulement annulaire périphérique (11), qui forme une butée axiale pour le stator (3), est formé sur le côté intérieur du boîtier de moteur (2) dans la région de l'ajustement serré.

4. Procédé de fabrication d'un moteur électrique (1) selon l'une quelconque des revendications 1 à 3, avec un stator (3) logé dans un boîtier de moteur (2), dans lequel pour le montage on chauffe d'abord le boîtier de moteur (2) à une température d'assemblage et on introduit ensuite le stator (3) sur une longueur axiale partielle dans le boîtier de moteur (2) et en outre on colle la surface latérale (8) du stator (3) avec le côté intérieur du boîtier de moteur (2) sur une autre longueur axiale partielle.

5. Procédé selon la revendication 4, **caractérisé en ce que** l'on introduit le stator (3) dans le boîtier de moteur (2) sans ajustement serré à la température d'assemblage.

6. Procédé selon la revendication 4 ou 5, **caractérisé en ce que** le stator (3) est logé avec ajustement serré dans le boîtier de stator (2) à la température normale.

7. Procédé selon l'une quelconque des revendications 4 à 6, **caractérisé en ce que** la température d'assemblage vaut au moins approximativement 120°C.

8. Procédé selon l'une quelconque des revendications 4 à 7, **caractérisé en ce que** l'on superpose une rotation relative entre le boîtier de moteur (2) et le stator (3) lors de l'insertion axiale du stator (3) dans le boîtier de moteur (2).
